# EUROPEAN PATENT APPLICATION

(11) **EP 4 852 100 A1**
(43) Date of publication of application: **09.12.2026**
(21) Application number: 26172929.7
(22) Date of filing: 17.04.2026
(51) Int. Cl.: H01M 4/66, H01M 4/70, H01M 4/02

(54) **ELECTRODE AND BATTERY**

(30) Priority: 02.06.2025 JP 2025091717
(71) Applicant: Toyota Jidosha Kabushiki Kaisha, Toyota-shi, Aichi-ken 471-8571 (JP)
(72) Inventor: UEDA, Masashi, Toyota-shi, Aichi-ken, 471-8571 (JP); KIDA, Tomohisa, Toyota-shi, Aichi-ken, 471-8571 (JP); HE, Yu, Toyota-shi, Aichi-ken, 471-8571 (JP); KINTSU, Yusuke, Toyota-shi, Aichi-ken, 471-8571 (JP); KAZAMA, Daichi, Toyota-shi, Aichi-ken, 471-8571 (JP); SATO, Tomohiro, Toyota-shi, Aichi-ken, 471-8571 (JP); IKEDA, Takenori, Toyota-shi, Aichi-ken, 471-8571 (JP); MIKI, Nariaki, Toyota-shi, Aichi-ken, 471-8571 (JP)
(74) Representative: Winter, Brandl - Partnerschaft mbB

(57) **Abstract**

An electrode (50) comprises a current collector (20) and a first electrode film (10a), wherein the first electrode film (10a) includes an electrode active material and a fibrous binder, the first electrode film (10a) is adhered to a first surface (20a) of the current collector (20), a carbon coating layer (30) is placed on a part of the first surface (20a) of the current collector (20), and on the first surface (20a) of the current collector (20), the carbon coating layer (30) is placed in a non-continuous pattern.

## Description

### CROSS REFERENCE TO RELATED APPLICATIONS

This nonprovisional application is based on Japanese Patent Application No. 2025-091717 filed on June 2, 2025, with the Japan Patent Office, the entire contents of which are hereby incorporated by reference.

### BACKGROUND

### Field

The present disclosure relates to an electrode and a battery.

### Description of the Background Art

Japanese Patent Laying-Open No. 2015-88333 and Japanese Patent Laying-Open No. 2019-87489 disclose providing a carbon coating layer on a current collector.

### SUMMARY

An electrode includes an electrode film. The electrode film includes an electrode active material and a binder. The electrode film is also referred to as "an active material layer", "a composite material layer", and the like, for example. When the electrode film has a high-density region and a low-density region, due to the difference between the ion diffusivity in the high-density region and the ion diffusivity in the low-density region, resistance can increase.

An object of the present disclosure is to provide an electrode in which density variations between different regions of an electrode film may be relatively small.

Hereinafter, the technical configuration and effects of the present disclosure will be described. It should be noted that the action mechanism includes presumption. The action mechanism does not limit the technical scope of the present disclosure.
1. An electrode according to one aspect of the present disclosure comprises a current collector and a first electrode film, wherein the first electrode film includes an electrode active material and a fibrous binder, the first electrode film is adhered to a first surface of the current collector, a carbon coating layer is placed on a part of the first surface of the current collector, and on the first surface of the current collector, the carbon coating layer is placed in a non-continuous pattern.
   On the first surface of the current collector, the carbon coating layer is placed in a non-continuous pattern. By placing the carbon coating layer at selected positions, it may be possible to adjust the pressure that is imposed on the first electrode film while the first electrode film is being made to adhere to the first surface of the current collector and, thereby, cancel density variations that can occur in the first electrode film to reduce density variations between different regions.
2. The electrode according to "1" above may include the following configuration, for example. The first electrode film has a first region adhered to the first surface of the current collector with the carbon coating layer interposed therebetween as well as a second region adhered to the surface of the current collector without the carbon coating layer interposed therebetween, and in the first electrode film, a ratio of a density of the second region to a density of the first region is from 0.8 to 1.2.
   With the ratio of the density of the second region to the density of the first region in the first electrode film being from 0.8 to 1.2, an increase of resistance that can be caused by density variations between different regions is expected to be reduced.
3. The electrode according to "1" or "2" above may include the following configuration, for example. The first electrode film is a self-standing film.
   The first electrode film in the form of a self-standing film may be formed as a result that the fibrous binder binds particles of the electrode active material.
4. The electrode according to any one of "1" to "3" above may include the following configuration, for example. The electrode further includes a second electrode film, wherein the second electrode film includes an electrode active material and a fibrous binder, the second electrode film is adhered to a second surface of the current collector, the second surface is opposite to the above-mentioned surface, a carbon coating layer is placed on a part of the second surface of the current collector, and on the second surface of the current collector, the carbon coating layer is placed in a non-continuous pattern.
   On the second surface of the current collector, the carbon coating layer is placed in a non-continuous pattern. By placing the carbon coating layer at selected positions, it may be possible to adjust the pressure that is imposed on the second electrode film while the second electrode film is being made to adhere to the second surface of the current collector and, thereby, cancel density variations that can occur in the second electrode film to reduce density variations between different regions.
5. The electrode according to "4" above may include the following configuration, for example. The second electrode film has a first region adhered to the second surface of the current collector with the carbon coating layer interposed therebetween as well as a second region adhered to the second surface of the current collector without the carbon coating layer interposed therebetween, and in the second electrode film, a ratio of a density of the second region to a density of the first region is from 0.8 to 1.2.
   With the ratio of the density of the second region to the density of the first region in the second electrode film being from 0.8 to 1.2, diffusion of the electrolyte solution across the entire area is expected to be facilitated.
6. The electrode according to "4" or "5" above may include the following configuration, for example. The second electrode film is a self-standing film.
   The second electrode film in the form of a self-standing film may be formed as a result that the fibrous binder binds particles of the electrode active material.
7. The electrode according to any one of "1" to "6" above may include the following configuration, for example. The current collector has a wavy shape undulating in a thickness direction, the current collector has a crest protruding to the first electrode film and a trough protruding away from the first electrode film, and on the first surface of the current collector, the carbon coating layer is placed at a region including the trough.
   In the case where a current collector having a wavy shape is used, there is a possibility that the pressure imposed on the first electrode film while the first electrode film is being made to adhere to the first surface of the current collector can vary between different regions, which can give rise to density variations. For example, it is possible that a region in contact with a crest of the current collector becomes a high-density region and a region in contact with a trough becomes a low-density region. Even in the case where a current collector having a wavy shape is used, by placing the carbon coating layer at selected positions, it may be possible to cancel potential density variations to reduce density variations between different regions
8. The electrode according to any one of "4" to "6" above may include the following configuration, for example. The current collector has a wavy shape undulating in a thickness direction, the current collector has a crest protruding to the first electrode film and a trough protruding away from the first electrode film, on the first surface of the current collector, the carbon coating layer is placed at a region including the trough, and on the second surface of the current collector, the carbon coating layer is placed at a region including the crest.

On the first surface of the current collector, the carbon coating layer is placed at a region including the trough, and on the second surface of the current collector, the carbon coating layer is placed at a region including the crest (a depressed part when viewed from the second surface side).

In the case where a current collector having a wavy shape is used, there is a possibility that in terms of the density of corresponding regions of the first electrode film adhered to the first surface and the second electrode film adhered to the second surface, a sparse region of one of the electrode films is a dense region of the other electrode film and a dense region of one of the electrode films is a sparse region of the other electrode film. When a region of the first surface on which the carbon coating layer is placed is different from a region of the second surface on which the carbon coating layer is placed, density variations that can occur in both the first electrode film and the second electrode film are expected to be reduced at the same time.

9. A battery according to one aspect of the present disclosure comprises the electrode according to any one of "1" to "8" above.

10. The battery according to "9" above may include the following configuration, for example. The battery has a bipolar structure.

In the following, an embodiment of the present disclosure (which may be simply called "the present embodiment" hereinafter) will be described. It should be noted that the present embodiment does not limit the technical scope of the present disclosure. The present embodiment is illustrative in any respect. The present embodiment is non-restrictive. The technical scope of the present disclosure encompasses any modifications within the meaning and the scope equivalent to the terms of the claims. For example, it is originally planned that any configurations of the present embodiment may be optionally combined.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a schematic view illustrating an example of an electrode according to the present embodiment.
Fig. 2 is a schematic cross-sectional view illustrating an electrode according to the present embodiment.
Fig. 3 is a schematic cross-sectional view illustrating an example of a method of producing an electrode.
Fig. 4 is a schematic cross-sectional view illustrating a current collector used in an embodiment.
Fig. 5 is a schematic cross-sectional view illustrating an example of a method of producing an electrode.
Fig. 6 is a schematic cross-sectional view illustrating a current collector used in an embodiment.
Fig. 7 is a schematic perspective view illustrating a first battery according to the present embodiment.
Fig. 8 is a schematic view of a cross section cut along the line VIII-VIII in Fig. 7.
Fig. 9 is a schematic view illustrating a second battery according to the present embodiment.

### DESCRIPTION OF THE PREFERRED EMBODIMENTS

### Terms and Phrases

Expressions such as "comprise", "include", and "have", and other similar terms are open-ended expressions. In the configuration expressed by an open-ended expression, in addition to an essential component, an additional component may or may not be further included. The expression "consist of" is a closed-end expression. However, even in a configuration that is expressed by a closed-end expression, impurities present under ordinary circumstances as well as an additional element irrelevant to the technique of interest may be included. The expression "consist essentially of" is a semiclosed-end expression. A configuration expressed by a semiclosed-end expression tolerates addition of an element that does not substantially affect the fundamental, novel features of the technique of interest.

Expressions such as "may" and "can" are not intended to mean "must" (obligation) but rather mean "there is a possibility" (tolerance).

Expressions such as "first" and "second" are used solely for differentiating a plurality of elements from each other. Such expressions do not limit the scope of these elements. For example, these expressions are independent of the order and the significance of these elements.

For example, the expression "at least one of A and B" includes "A or B" and "A and B". "At least one of A and B" may also be expressed as "A and/or B".

Any geometric term should not be interpreted solely in its exact meaning. Examples of geometric terms include "parallel", "vertical", "orthogonal", and the like. For example, as long as substantially the same or similar functions are obtained, the relative direction, angle, distance, and the like may vary. Any geometric term herein may include tolerances and/or errors in terms of design, operation, production, and/or the like. The dimensional relationship in each figure may not necessarily coincide with the actual dimensional relationship. For the purpose of assisting understanding for the readers, the dimensional relationship in each figure may have been changed. For example, length, width, thickness, and the like may have been changed. A part of a given configuration may have been omitted.

"Self-standing film" refers to a film that is capable of maintaining its film shape by itself without a support.

"Electrode" collectively refers to a positive electrode, a negative electrode, and a bipolar electrode.

For example, image analysis of an SEM (Scanning Electron Microscope) image and the like may be carried out with software. For example, "ImageJ" and the like may be used. The magnification for SEM examination and the like may be changed as appropriate to be suitable for the measurement target. The magnification for examination may be from 1000 times to 20000 times, for example.

A numerical range such as "(from) m% to n%" includes both the upper limit and the lower limit, unless otherwise specified. That is, "(from) m% to n%" means a numerical range of "not less than m% and not more than n%". Moreover, "not less than m% and not more than n%" includes "more than m% and less than n%". Each of "not less than" (or "or more") and "not more than" (or "or less") is represented by an inequality symbol with an equality symbol, e.g., "≤, ≥". Each of "more than" and "less than" is represented by an inequality symbol without an equality symbol, e.g., "<, >". Any numerical value selected from a certain numerical range may be used as a new upper limit or a new lower limit. For example, any numerical value from a certain numerical range may be combined with any numerical value described in another location of the present specification or in a table or a drawing to set a new numerical range. For example, an infinite interval (a<x, x<b, a≤x, x≤b) may be set by one numerical value freely selected from a group of numerical values listed in the present specification, and a finite interval (a≤x≤b, a<x<b, a≤x<b, a<x≤b) may be set by two numerical values freely selected from a group of numerical values listed in the present specification.

All the numerical values are regarded as being modified by the term "about". The term "about" may mean ±5%, ±3%, ±1%, and/or the like, for example. Each numerical value may be an approximate value that can vary depending on the implementation configuration of the technique of interest. Each numerical value may be expressed in significant figures. Unless otherwise specified, each measured value may be the average value obtained by multiple rounds of measurement. The number of rounds of measurement may be 3 or more, or may be 5 or more, or may be 10 or more. Generally, the greater the number of rounds of measurement is, the more reliable the average value is expected to be. Each measured value may be rounded off based on the number of the significant figures. Each measured value may include an error occurring due to the identification limit of the measurement apparatus, for example.

An apparatus, software, and/or the like used for measurement of various values and the like is merely an example. It is possible to use a product similar to the apparatus and/or the like presented as an example. When a similar product is used, the measurement conditions may be adjusted to be suitable for the apparatus.

"Fibrous" means that the aspect ratio (the ratio of the major-axis diameter to the minor-axis diameter) is 10 or more. A substance having an aspect ratio of less than 10 is regarded as being "particulate". The aspect ratio of a fibrous substance (the ratio of the fiber length to the fiber diameter) may be 100 or more, for example. The minor-axis diameter, the major-axis diameter, the fiber diameter, and the fiber length are measured by a microscope method. The aspect ratio is the arithmetic mean of ten measurement targets. The length of the short side of a minimum bounding rectangular "MBR" of the measurement target is regarded as the minor-axis diameter, and the length of the long side is regarded as the major-axis diameter. The fiber diameter refers to the dimension in the direction orthogonal to the axial direction of the measurement target. The fiber length refers to the total length in the axial direction.

A chemical formula and a general formula represent a typical example of a compound. A compound may have a stoichiometric composition, or may have a non-stoichiometric composition. For example, "Al₂O₃" is not limited to a compound where the ratio in amount of substance (the molar ratio) is "Al/O=2/3". "Al₂O₃" represents a compound that includes Al and O in any ratio in amount of substance, unless otherwise specified. For example, the compound may be doped with a trace element. Some of Al and/or O may be replaced by another element.

The chemical composition of a compound may be measured by inductively coupled plasma atomic emission spectroscopy (ICP-AES). A sample (for example, a positive electrode active material) in an amount of 0.1 g is dissolved in a mixed acid (10 ml) of hydrochloric acid and sulfuric acid to prepare a sample solution. The sample solution is diluted to a proper concentration with the use of a volumetric flask. After dilution, composition analysis is carried out with an ICP-AES apparatus. For example, a product under the trade name "PS3520 UVDD II (manufactured by Hitachi High-Tech Science)" and/or the like may be used.

"Derivative" refers to a compound that is derived from its original compound by at least one partial modification selected from the group consisting of functional group introduction, atom replacement, oxidation, reduction, and other chemical reactions. The position of modification may be one position, or may be a plurality of positions. "Substituent" may include at least one selected from the group consisting of alkyl group, alkenyl group, alkynyl group, cycloalkyl group, unsaturated cycloalkyl group, aromatic group, heterocyclic group, halogen atom (F, Cl, Br, I, etc.), OH group, SH group, CN group, SCN group, OCN group, nitro group, alkoxy group, unsaturated alkoxy group, amino group, alkylamino group, dialkylamino group, aryloxy group, acyl group, alkoxycarbonyl group, acyloxy group, aryloxycarbonyl group, acylamino group, alkoxycarbonylamino group, aryloxy carbonylamino group, sulfonylamino group, sulfamoyl group, carbamoyl group, alkylthio group, arylthio group, sulfonyl group, sulfinyl group, ureido group, phosphoramide group, sulfo group, carboxy group, hydroxamic acid group, sulfino group, hydrazino group, imino group, silyl group, and the like, for example. These substituents may be further substituted. When there are two or more substituents, these substituents may be the same as one another or may be different from each other. A plurality of substituents may be bonded together to form a ring.

### Electrode

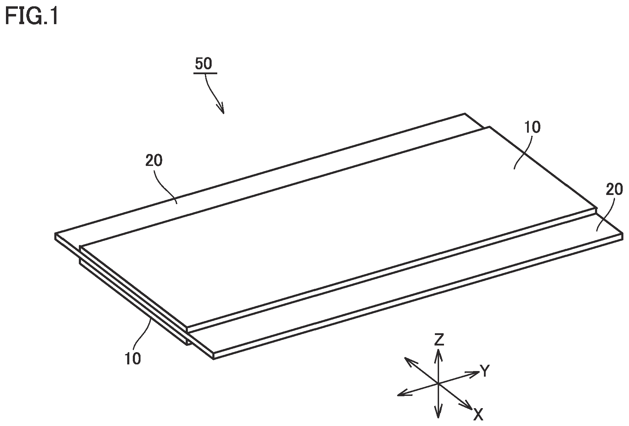

Fig. 1 is a schematic view illustrating an example of an electrode according to the present embodiment. An electrode 50 is for a battery. Electrode 50 may be used in any type of battery system. The battery may be a lithium-ion battery, a sodium-ion battery, a nickel-metal hydride battery, a nickel-zinc battery, and/or the like, for example. In the present embodiment, application to a lithium-ion battery is described as an example. The battery may include a liquid electrolyte, a gelled electrolyte, a solid electrolyte, and/or the like. In other words, the battery may be a liquid-type battery, a polymer battery, a solid-state battery, an all-solid-state battery, and/or the like. "Solid-state battery" refers to a battery including a solid electrolyte as well as other electrolytes. The above-mentioned battery may be a wound-type one, or may be a stack-type one, for example. The battery may have a monopolar structure, or may have a bipolar structure, for example. Details of the battery will be described below.

The planar shape of electrode 50 is not particularly limited. The planar shape of electrode 50 may be belt-like, rectangular, circular, and/or the like, for example. Electrode 50 includes a current collector 20 and an electrode film 10 in this order in the thickness direction (the Z-axis direction). For example, electrode film 10 may be placed directly on a surface of current collector 20. For example, between current collector 20 and electrode film 10, an adhesive layer, a conductive layer, and/or the like may be interposed. For example, electrode film 10 may be placed on only one side of current collector 20. Electrode film 10 may be placed on both sides of current collector 20. When electrode films 10 on the two sides have the same polarity, a monopolar electrode (a positive electrode or a negative electrode) is formed. When electrode films 10 on the two sides have different polarities, a bipolar electrode is formed. Two surfaces of current collector 20 may be differentiated from each other, and in that case, one of them may be referred to as "a first surface" and the other may be referred to as "a second surface". Regarding electrode film 10 provided on a surface of current collector 20, electrode film 10 provided on the first surface of current collector 20 may be referred to as "a first electrode film" and electrode film 10 provided on the second surface of current collector 20 may be referred to as "a second electrode film".

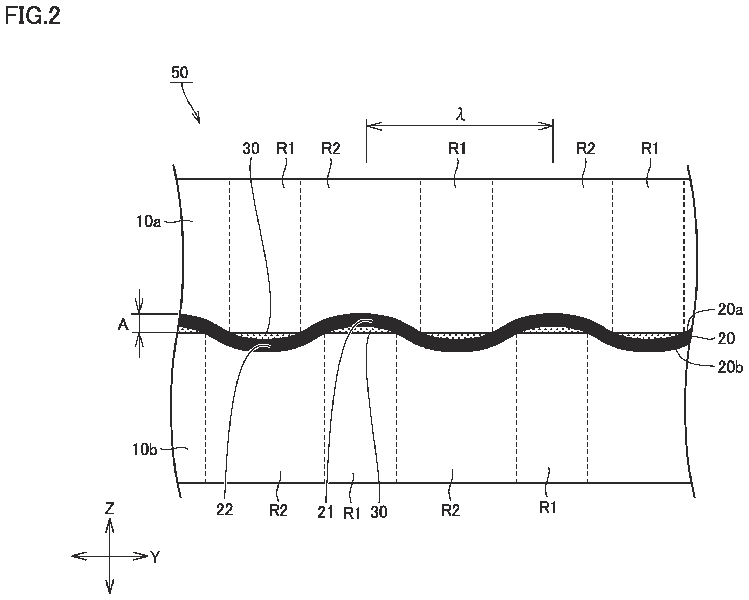

Fig. 2 is a schematic cross-sectional view illustrating an electrode according to the present embodiment. Current collector 20 has a first surface 20a and a second surface 20b. A first electrode film 10a is adhered to first surface 20a of current collector 20, and a second electrode film 10b is adhered to second surface 20b. Each of first electrode film 10a and second electrode film 10b includes an electrode active material and a fibrous binder. In a possible aspect, the electrode has first electrode film 10a on the first surface of current collector 20, and on second surface 20b, it does not have second electrode film 10b or it has an electrode film having a configuration different from second electrode film 10b. When first electrode film 10a and second electrode film 10b have the same polarity, a monopolar electrode (a positive electrode or a negative electrode) is formed. When first electrode film 10a and second electrode film 10b have different polarities, a bipolar electrode is formed.

On a part of first surface 20a of current collector 20, a carbon coating layer 30 is placed. On first surface 20a, carbon coating layer 30 is placed in a non-continuous pattern. First electrode film 10a has a first region R1 adhered to first surface 20a of current collector 20 with carbon coating layer 30 interposed therebetween as well as a second region R2 adhered to first surface 20a of current collector 20 without carbon coating layer 30 interposed therebetween. In first electrode film 10a, the boundary between first region R1 and second region R2 runs in the thickness direction of first electrode film 10a (the Z-axis direction).

On a part of second surface 20b of current collector 20, carbon coating layer 30 is placed. On second surface 20b, carbon coating layer 30 is placed in a non-continuous pattern. Second electrode film 10b has first region R1 adhered to second surface 20b of current collector 20 with carbon coating layer 30 interposed therebetween and second region R2 adhered to second surface 20b of current collector 20 without carbon coating layer 30 interposed therebetween. In second electrode film 10b, the boundary between first region R1 and second region R2 runs in the thickness direction of second electrode film 10b (the Z-axis direction).

By placing carbon coating layer 30 in a non-continuous pattern on first electrode film 10a and second electrode film 10b, it is possible to cancel density variations that can occur between different regions in both first electrode film 10a and second electrode film 10b and, thereby, reduce density variations between different regions.

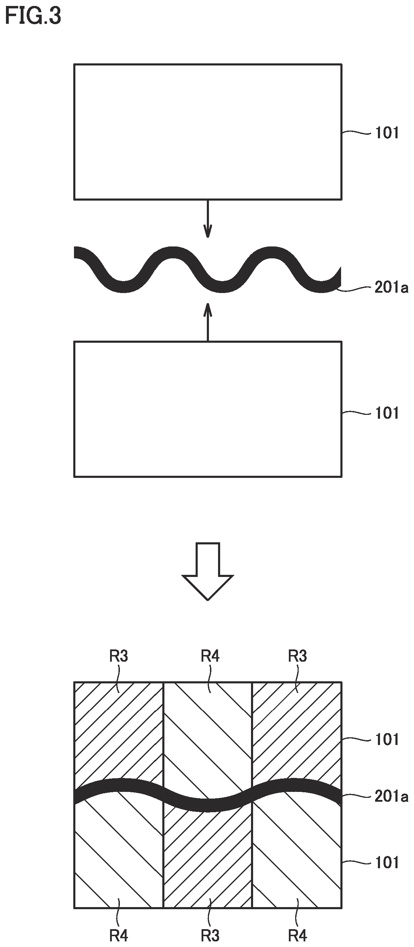

Fig. 3 is a schematic cross-sectional view illustrating an example of a method of producing an electrode. With reference to the example illustrated in Fig. 3, a description will be given of one example of a mechanism presumably responsible for density variations between different regions in the electrode film.

Referring to Fig. 3, a current collector 201a having a wavy shape as well as two electrode films 101 each in the form of a self-standing film are prepared. The two electrode films 101 are pressed against current collector 201a from both sides and thereby affixed to current collector 201a. At the time of affixation, even when the force is uniformly imposed across the entire area of each electrode film 101, the pressure imposed on different regions of electrode film 101 may vary due to the wavy shape of current collector 201a, namely the pressing target. More specifically, it is possible that the pressure imposed on a region R3 where current collector 201a protrudes to electrode film 101 is high and the pressure imposed on a region R4 where current collector 201a protrudes away from electrode film 101 is low, to give rise to density variations between region R3 and region R4.

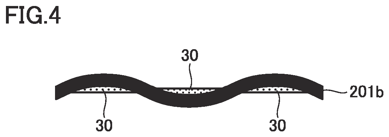

Fig. 4 is a schematic cross-sectional view illustrating a current collector used in an embodiment of the present disclosure. Referring to Fig. 4, on each side of a current collector 201b having a wavy shape, carbon coating layer 30 is placed in a non-continuous pattern. Carbon coating layer 30 is placed so as to include a depressed region.

Replacing current collector 201a in Fig. 3 by current collector 201b in Fig. 4 is expected to reduce variations in the pressure imposed on electrode films 101 while the two electrode films 101 are being pressed, and thereby cancel density variations that can occur between region R3 and region R4. It should be noted that in the present embodiment, during the step illustrated in Fig. 3, at the time of pressing the two electrode films 101, it is possible to apply different amounts of force to different regions to further reduce the variations in the pressure imposed on electrode films 101 while the two electrode films 101 are being pressed.

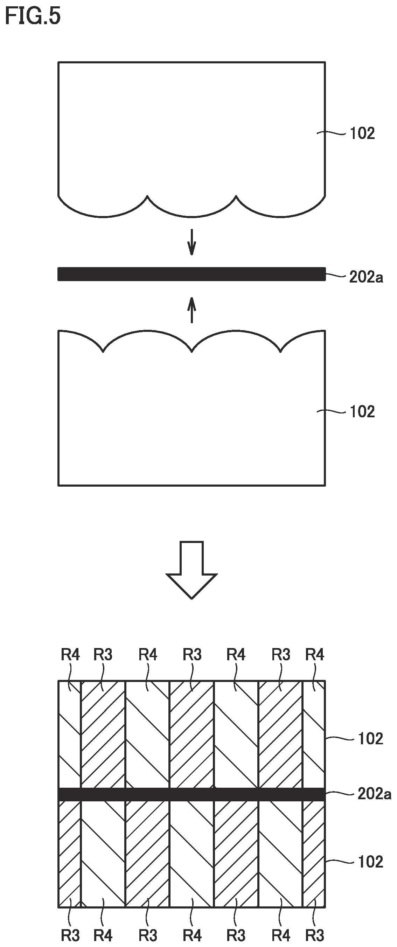

Fig. 5 is a schematic cross-sectional view illustrating an example of a method of producing an electrode. With reference to the example illustrated in Fig. 5, a description will be given of another example of a mechanism presumably responsible for density variations between different regions in the electrode film.

Referring to Fig. 5, a flat current collector 202a and two electrode films 102 each in the form of a self-standing film are prepared. The surface of each electrode film 102 that faces the current collector 202a has a wavy shape. Due to the roll shaping process, the roll-to-roll passing process, the roll transfer process, and the like during electrode film production, the resulting electrode film may have a non-flat surface such as, for example, a wavy surface as in the case of electrode film 102.

The two electrode films 102 are pressed against current collector 202a from both sides and thereby affixed to current collector 202a. At the time of affixation, even when the force is uniformly imposed across the entire area of each electrode film 102, the pressure imposed on different regions of electrode film 102 may vary due to the wavy shape of the surface of electrode film 102 as well as the thickness variations between different regions. More specifically, it is possible that the pressure imposed on region R3 where the surface of electrode film 102 protrudes to current collector 202a is high and the pressure imposed on region R4 where it is depressed and farther from current collector 202a is low, to give rise to density variations between region R3 and region R4.

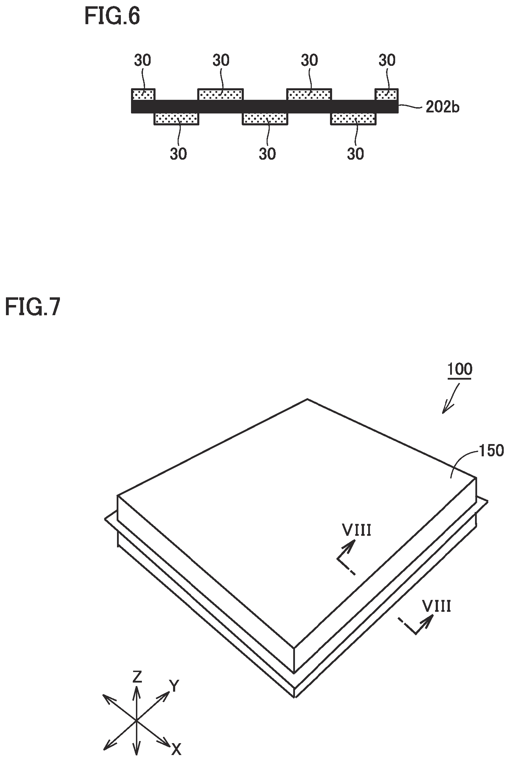

Fig. 6 is a schematic cross-sectional view illustrating a current collector used in an embodiment of the present disclosure. Referring to Fig. 6, on both sides of a current collector 202b, carbon coating layer 30 is placed in a non-continuous pattern. Carbon coating layer 30 is placed so as to include a region facing the depressed region of the surface of electrode film 102.

Replacing current collector 202a in Fig. 5 by current collector 202b in Fig. 6 is expected to reduce variations in the pressure imposed on electrode films 102 while the two electrode films 102 are being pressed, and thereby cancel density variations that can occur between region R3 and region R4. It should be noted that in the present embodiment, during the step illustrated in Fig. 5, at the time of pressing the two electrode films 102, it is possible to apply different amounts of force to different regions to further reduce the variations in the pressure imposed on electrode films 102 while the two electrode films 102 are being pressed.

Referring back to Fig. 2, in first electrode film 10a and second electrode film 10b, the ratio of the density of second region R2 to the density of first region R1 may be from 0.8 to 1.2, for example. In each of first electrode film 10a and second electrode film 10b, the density of first region R1 and second region R2 may be independently in a range having only one of the upper limit and the lower limit each of which is any one numerical value selected from the group consisting of 0.5 g/cm³, 1.0 g/cm³, 1.5 g/cm³, 2.0 g/cm³, 2.5 g/cm³, 3.0 g/cm³, 3.5 g/cm³, 4.0 g/cm³, 4.5 g/cm³, and 5.0 g/cm³, for example, or in a range having both the upper limit and the lower limit that are any two numerical values selected from the above-mentioned group. The above-mentioned range may or may not include an endpoint. The density of electrode film 10 may be in the range of 0.5 g/cm³ to 5.0 g/cm³, for example.

### Current Collector

Current collector 20 is electrically conductive. Current collector 20 may include a metal foil sheet, an electrically-conductive resin film, and/or the like, for example. Current collector 20 may include at least one selected from the group consisting of an Al foil sheet, an Al alloy foil sheet, a Cu foil sheet, a Cu alloy foil sheet, a Ni foil sheet, a Ti foil sheet, and a stainless steel (SUS) foil sheet, for example. When electrode 50 is a bipolar electrode, current collector 20 may be formed by bonding an Al foil sheet and a Cu foil sheet together with an adhesive agent, for example. The thickness of current collector 20 may be in a range having only one of the upper limit and the lower limit each of which is any one numerical value selected from the group consisting of 5 µm, 10 µm, 15 µm, 20 µm, 25 µm, 30 µm, 35 µm, 40 µm, 45 µm, and 50 µm, for example, or in a range having both the upper limit and the lower limit that are any two numerical values selected from the above-mentioned group. The above-mentioned range may or may not include an endpoint. The thickness of current collector 20 may be in the range of 5 µm to 50 µm, for example.

Current collector 20 may be flat, for example. As illustrated in Fig. 2, a cross section of current collector 20 may have a wavy shape undulating in the thickness direction, for example. The wavy shape has crests 21 protruding to first electrode film 10a and troughs 22 protruding away from first electrode film 10a (protruding to second electrode film 10b in Fig. 2) in an alternate manner. The wavy shape may be formed in the length direction of current collector 20, or in the width direction thereof.

The wavelength "λ" refers to the distance between crests 21. The wavelength may be uniform or may vary. The wavelength may be in a range having only one of the upper limit and the lower limit each of which is any one numerical value selected from the group consisting of 50 µm, 75 µm, 100 µm, 125 µm, 150 µm, 175 µm, 200 µm, 250 µm, 300 µm, 400 µm, and 500 µm, for example, or in a range having both the upper limit and the lower limit that are any two numerical values selected from the above-mentioned group. The above-mentioned range may or may not include an endpoint. The wavelength may be in the range of 50 µm to 500 µm, for example.

The amplitude "A" refers to the height of crest 21 or the depth of trough 22. The amplitude may be uniform or may vary. The amplitude may be in a range having only one of the upper limit and the lower limit each of which is any one numerical value selected from the group consisting of 5 µm, 10 µm, 15 µm, 20 µm, 25 µm, 30 µm, 35 µm, 40 µm, 45 µm, and 50 µm, for example, or in a range having both the upper limit and the lower limit that are any two numerical values selected from the above-mentioned group. The above-mentioned range may or may not include an endpoint. The amplitude may be in the range of 5 µm to 50 µm, for example.

The method for forming the wavy shape is not particularly limited. For example, the wavy shape may be formed by corrugation machining. For example, current collector 20 (such as a metal foil sheet) may be passed through a gap between a pair of engaging toothed wheels and thereby the wavy shape of current collector 20 may be formed.

On first surface 20a, carbon coating layer 30 may be placed at a region including trough 22. On second surface 20b, carbon coating layer 30 may be placed at a region including crest 21. Here, crest 21 refers to the highest position of first surface 20a protruding to first electrode film 10a, and trough 22 refers to the deepest position of first surface 20a protruding away from first electrode film 10a. Crest 21 is a depressed part of second surface 20b, and trough 22 is a part of the second surface protruding to second electrode film 10b. In the case where carbon coating layer 30 is placed on first surface 20a at a region including trough 22, it is preferable that the region at which carbon coating layer 30 is placed do not include crest 21, and, for example, the size of each side of the region starting from the center of trough 22 may be in a range having both the upper limit and the lower limit that are any two numerical values selected from the group consisting of a quarter, two quarters, and three quarters of the length of a curve connecting trough 22 and an adjacent crest 21. This range may or may not include an endpoint. In the case where carbon coating layer 30 is placed on second surface 20b at a region including crest 21, it is preferable that the region at which carbon coating layer 30 is placed do not include trough 22, and, for example, the size of each side of the region starting from the center of crest 21 may be in a range having both the upper limit and the lower limit that are any two numerical values selected from the group consisting of a quarter, two quarters, and three quarters of the length of a curve including crest 21 and an adjacent trough 22. This range may or may not include an endpoint.

### Carbon Coating Layer 30

Carbon coating layer 30 is placed on a part of the surface of current collector 20. Referring to Fig. 2, on first surface 20a and second surface 20b of current collector 20, carbon coating layer 30 is placed in a non-continuous pattern.

Carbon coating layer 30 includes a carbon material. For example, the carbon material may include at least one selected from the group consisting of carbon black, graphite, carbon fibers, carbon nanotubes, and graphene flakes. For example, carbon coating layer 30 may further include a binder and/or the like in addition to the carbon material. The binder is not particularly limited, and, for example, it may include polyvinylidene difluoride (PVDF), polyolefin, and/or the like. For example, carbon coating layer 30 may include the carbon material in a mass fraction of 10 to 90% with the remainder being made up of the binder.

The thickness of carbon coating layer 30 may be in a range having only one of the upper limit and the lower limit each of which is any one numerical value selected from the group consisting of 1 µm, 2 µm, 3 µm, 4 µm, 5 µm, 10 µm, 20 µm, and 30 µm, for example, or in a range having both the upper limit and the lower limit that are any two numerical values selected from the above-mentioned group. The above-mentioned range may or may not include an endpoint. The thickness may be from 1 µm to 30 µm, for example. The thickness of carbon coating layer 30 is the thickness of the thickest part. With carbon coating layer 30 thus provided, density variations that can occur in electrode film 10 are expected to be canceled and thereby density variations between different regions are expected to be reduced. In addition, with carbon coating layer 30 thus provided, adhesion to electrode film 10 is expected to be enhanced.

Carbon coating layer 30 can be formed by application of a coating material to a desired region, for example. The method of application is not particularly limited, and gravure application, die application, and/or the like can be employed followed by sufficient drying to form carbon coating layer 30. For locally forming carbon coating layer 30, it is possible to place a mask during application on a region on which carbon coating layer 30 should not be formed. The coating material can be prepared by mixing the carbon material and the binder mentioned above in a solvent. The solvent is not particularly limited, and water, an organic solvent, and/or the like can be used. To the coating material, a dispersant may be added. The dispersant can be carboxymethylcellulose and/or the like, for example. The coating material can be prepared by using a dispersing apparatus. The dispersing apparatus can be a homomixer, a kneader, a ball mill, a bead mill, and/or the like.

### Electrode Film

Electrode film 10 may be either a non-self-standing film or a self-standing film. The self-standing film may be strong enough to withstand roll transportation and the like without a support such as current collector 20, for example. The tensile strength of the self-standing film may be in a range having only one of the upper limit and the lower limit each of which is any one numerical value selected from the group consisting of 0.1 MPa, 0.2 MPa, 0.3 MPa, 0.5 MPa, 0.6 MPa, 0.7 MPa, 0.8 MPa, 0.9 MPa, and 1.0 MPa, for example, or in a range having both the upper limit and the lower limit that are any two numerical values selected from the above-mentioned group. The above-mentioned range may or may not include an endpoint. The tensile strength of the self-standing film may be in the range of 0.1 MPa to 1.0 MPa, for example. The tensile strength of the self-standing film may be 0.5 MPa or more, for example. When the self-standing film has a tensile strength of 0.5 MPa or more, web handling and/or the like is expected to be easier to carry out, for example.

The dimensions (such as the thickness, length, width, and the like) of electrode film 10 may be freely changed. The thickness of electrode film 10 may be in a range having only one of the upper limit and the lower limit each of which is any one numerical value selected from the group consisting of 5 µm, 10 µm, 25 µm, 50 µm, 75 µm, 100 µm, 150 µm, 200 µm, 250 µm, 300 µm, 400 µm, 500 µm, 600 µm, 700 µm, 800 µm, 900 µm, and 1000 µm, for example, or in a range having both the upper limit and the lower limit that are any two numerical values selected from the above-mentioned group. The above-mentioned range may or may not include an endpoint. The thickness of electrode film 10 may be in the range of 5 µm to 1000 µm, for example.

Electrode film 10 may include a freely-selected component in addition to the electrode active material and the fibrous binder. Electrode film 10 may further include a conductive material, a solid electrolyte, a non-fibrous binder, and/or the like, for example. Electrode film 10 may include a first binder in a mass fraction of 0.1% to 10%, a second binder in 0 to 10%, a conductive material in 0 to 10%, and a solid electrolyte in 0 to 30%, with the remainder being made up of the electrode active material, for example.

### Electrode Active Material

The electrode active material is in the form of powder. The particle size distribution of the electrode active material may be monomodal, for example. The particle size distribution may be either a volume-based distribution or a number-based distribution. The volume-based distribution may be measured by laser diffraction. The number-based distribution may be measured by a microscope method. "D50" refers to a particle size in cumulative distribution at which cumulative frequency reaches 50%. The D50 of the electrode active material may be in a range having only one of the upper limit and the lower limit each of which is any one numerical value selected from the group consisting of 0.1 µm, 0.5 µm, 1 µm, 3 µm, 5 µm, 10 µm, 15 µm, 20 µm, 25 µm, and 30 µm, for example, or in a range having both the upper limit and the lower limit that are any two numerical values selected from the above-mentioned group. The above-mentioned range may or may not include an endpoint. The D50 of the electrode active material may be in the range of 0.1 µm to 30 µm, for example.

The particle size distribution of the electrode active material may be either bimodal or multimodal, for example. When the particle size distribution (frequency distribution) is bimodal, for example, particles that belong to the peak of larger particle sizes are "large particles". Particles that belong to the peak of smaller particle sizes are "small particles". The modal diameter of each peak may be regarded as the particle size of the corresponding particles. "Modal diameter" refers to the particle size for the peak top in the frequency distribution. The ratio "D_{L}/D_{S}" of the particle size "D_{L}" of the large particles to the particle size "D_{S}" of the small particles may be in a range having only one of the upper limit and the lower limit each of which is any one numerical value selected from the group consisting of 1.2, 1.5, 2.0, 3.0, 4.0, and 5.0, for example, or in a range having both the upper limit and the lower limit that are any two numerical values selected from the above-mentioned group. The above-mentioned range may or may not include an endpoint. Relationships such as "1.2≤D_{L}/D_{S}≤5.0" may be satisfied, for example.

The electrode active material may be either in the form of primary particles or in the form of secondary particles. The particle shape of the electrode active material is not particularly limited. The particle shape may be spherical, elliptically spherical, flake-like, plate-like, columnar, lump-like, amorphous, and/or the like, for example.

The electrode active material may be in the form of granules. The method for forming the granules is not particularly limited. For example, the granules may be formed by spray drying, stirring granulation, and/or the like. By granulation, it is possible to adjust the sphericity of the granules (secondary particles). "Sphericity" refers to the circularity in an SEM image (a two-dimensional image). The sphericity (circularity) is determined by the following equation. As the sphericity, the arithmetic mean of ten particles is used. $ψ = 4 πS / {L}^{2}$
ψ: Sphericity (circularity)
π: Circular constant
S: Cross-sectional area of particle (the area of a region surrounded by the contour of the particle)
L: Perimeter of particle (the length of the contour of the particle)

The sphericity "y" of the electrode active material may be in a range having only one of the upper limit and the lower limit each of which is any one numerical value selected from the group consisting of 0.1, 0.2, 0.3, 0.4, 0.5, 0.6, 0.7, 0.8, 0.9, and 1.0, for example, or in a range having both the upper limit and the lower limit that are any two numerical values selected from the above-mentioned group. The above-mentioned range may or may not include an endpoint. Relationships such as "0.1≤ψ≤1.0" may be satisfied, for example.

The aspect ratio of the electrode active material is not particularly limited. The aspect ratio of the electrode active material may be in a range having only one of the upper limit and the lower limit each of which is any one numerical value selected from the group consisting of 1, 1.2, 1.5, 1.8, 2, 3, 4, 5, 6, 7, 8, and 9, for example, or in a range having both the upper limit and the lower limit that are any two numerical values selected from the above-mentioned group. The above-mentioned range may or may not include an endpoint. The aspect ratio of the electrode active material may be in the range of 1 to 9, for example.

The electrode active material may be a negative electrode active material. The negative electrode active material may include, for example, at least one selected from the group consisting of natural graphite (flake graphite, spheroidized graphite), artificial graphite, soft carbon, hard carbon, silicon, silicon oxide, silicon-based alloy, silicon-carbon composite material "Si-C", lithium silicate, tin, tin oxide, tin-based alloy, and lithium titanate. For example, the spheroidized graphite may be covered with amorphous carbon. For example, natural graphite, artificial graphite, soft carbon, and hard carbon may be collectively referred to as "a carbon-based active material". The silicon may include any crystalline phase. The silicon may include at least one selected from the group consisting of a clathrate I type phase, a clathrate II type phase, and a diamond phase, for example. Si-C refers to a composite particle that includes at least one of silicon and silicon oxide as well as carbon. For example, silicon may be supported in the internal space of a carbon particle. The carbon particle may be either a graphite particle or an amorphous carbon particle. For example, silicon, silicon oxide, silicon-based alloy, and silicon-carbon composite material may be collectively referred to as "a Si-based active material".

The negative electrode active material may be a mixture of natural graphite and artificial graphite, for example. The mass ratio "(natural graphite):(artificial graphite)" may be in a range defined by two endpoints that are any two sets selected from the group consisting of "1:9", "2:8", "3:7", "4:6", "5:5", "6:4", "7:3", "8:2", and "9:1", for example. Relationships such as the mass ratio "(natural graphite): (artificial graphite)=1:9 to 9:1" may be satisfied, for example.

The negative electrode active material may be a mixture of a carbon-based active material and a Si-based active material, for example. The mass ratio "(carbon-based active material):(Si-based active material)" may be in a range defined by two endpoints that are any two sets selected from the group consisting of "1:99", "5:95", "10:90", "20:80", "30:70", "40:60", "50:50", "60:40", "70:30", "80:20", "90:10", "95:5", and "99:1", for example. Relationships such as the mass ratio "(carbon-based active material):(Si-based active material)=1:99 to 99:1" may be satisfied, for example.

The electrode active material may be a positive electrode active material. The positive electrode active material may include at least one selected from the group consisting of a lamellar compound, a rock salt-type compound, a spinel-type compound, and an olivine-type compound, for example. The positive electrode active material may be a mixture of a lamellar compound and an olivine-type compound, for example. The mass ratio "(lamellar compound):(olivine-type compound)" may be in a range defined by two endpoints that are any two sets selected from the group consisting of "1:9", "2:8", "3:7", "4:6", "5:5", "6:4", "7:3", "8:2", and "9:1", for example. Relationships such as the mass ratio "(lamellar compound):(olivine-type compound)=1:9 to 9:1" may be satisfied, for example.

The positive electrode active material may include at least one selected from the group consisting of Li[NiCoMn]O₂ (lamellar compound), Li[NiCoAl]O₂ (lamellar compound), LiMnO₂ (rock salt-type compound), Li[NiMn]₂O₄ (spinel-type compound), and Li[MnFe]PO₄ (olivine-type compound), for example. It should be noted that an expression such as [NiCoMn] means that the constituents within the parentheses [ ] are collectively regarded as a single unit in the entire composition ratio. As long as [NiCoMn] is collectively regarded as a single unit, the composition ratio of the individual constituents within the parentheses [ ] is not particularly limited. For example, the amount of one or more constituents in the composition ratio may be zero.

The lamellar compound may have a composition represented by the general formula "LiₓNiₐCo_{b}M_{c}O_{y}", for example. "x" in the formula may be in a range having only one of the upper limit and the lower limit each of which is any one numerical value selected from the group consisting of 0.1, 0.2, 0.3, 0.4, 0.5, 0.6, 0.7, 0.8, 0.9, 1.0, 1.1, 1.2, 1.3, 1.4, and 1.5, for example, or in a range having both the upper limit and the lower limit that are any two numerical values selected from the above-mentioned group. The above-mentioned range may or may not include an endpoint. Relationships such as "0.1≤x≤1.5" may be satisfied, for example. In the formula, the relationship "a+b+c=1" is satisfied. As long as this relationship is satisfied, the ranges of "a", "b", and "c" may be independently in a range having only one of the upper limit and the lower limit each of which is any one numerical value selected from the group consisting of 0, 0.05, 0.1, 0.2, 0.3, 0.4, 0.5, 0.6, 0.7, 0.8, 0.9, and 1.0, for example, or in a range having both the upper limit and the lower limit that are any two numerical values selected from the above-mentioned group. The above-mentioned range may or may not include an endpoint. Relationships such as "0≤a≤1", "0≤b≤1", and "0≤c≤1" may be satisfied, for example. Relationships such as "0.5≤a≤0.9", "0.05≤b≤0.5", and "0.05≤c≤0.5" may be satisfied, for example. "M" in the formula may be at least one selected from the group consisting of Mn and Al, for example. "y" in the formula may be in a range having only one of the upper limit and the lower limit each of which is any one numerical value selected from the group consisting of 1.6, 1.7, 1.8, 1.9, 2.0, 2.1, 2.2, 2.3, and 2.4, for example, or in a range having both the upper limit and the lower limit that are any two numerical values selected from the above-mentioned group. The above-mentioned range may or may not include an endpoint. Relationships such as "1.6≤y≤2.4" may be satisfied, for example.

The lamellar compound may include at least one selected from the group consisting of LiₓNiO_{y}, LiₓCoO_{y}, LiₓMnO_{y}, LiₓNi_{1/3}Co_{1/3}Mn_{1/3}O_{y}, LiₓNi_{0.4}Co_{0.3}Mn_{0.3}O_{y}, LiₓNi_{0.5}Co_{0.2}Mn_{0.3}O_{y}, LiₓNi_{0.5}Co_{0.3}Mn_{0.2}O_{y}, LiₓNi_{0.5}Co_{0.4}Mn_{0.1}O_{y}, LiNi_{0.5}Co_{0.1}Mn_{0.4}O_{y}, LiₓNi_{0.6}Co_{0.3}Mn_{0.1}O_{y}, LiₓNi_{0.6}Co_{0.2}Mn_{0.2}O_{y}, LiₓNi_{0.6}Co_{0.1}Mn_{0.3}O_{y}, LiₓNi_{0.7}Co_{0.2}Mn_{0.1}O_{y}, LiₓNi_{0.7}Co_{0.1}Mn_{0.2}O_{y}, LiₓNi_{0.8}Co_{0.1}Mn_{0.1}O_{y}, LiₓNi_{0.8}Co_{0.15}Al_{0.05}O_{y}, and LiₓNi_{0.9}Co_{0.05}Mn_{0.05}O_{y}, for example. In each formula, relationships such as "0.1≤x≤1.5" and "1.6≤y≤2.4" may be satisfied, for example.

The olivine-type compound may have a composition represented by the general formula "LiMPO₄", for example. "M" in the formula may be at least one selected from the group consisting of Fe, Ni, Co, and Mn, for example.

The olivine-type compound may have a composition represented by the general formula "LiₓMn₁₋ₐFeₐPO_{y}", for example. "x" in the formula may be in a range having only one of the upper limit and the lower limit each of which is any one numerical value selected from the group consisting of 0.1, 0.2, 0.3, 0.4, 0.5, 0.6, 0.7, 0.8, 0.9, 1.0, 1.1, 1.2, 1.3, 1.4, and 1.5, for example, or in a range having both the upper limit and the lower limit that are any two numerical values selected from the above-mentioned group. The above-mentioned range may or may not include an endpoint. Relationships such as "0.1≤x≤1.5" may be satisfied, for example. "a" in the formula may be in a range having only one of the upper limit and the lower limit each of which is any one numerical value selected from the group consisting of 0, 0.1, 0.2, 0.3, 0.4, 0.5, 0.6, 0.7, 0.8, 0.9, and 1.0, for example, or in a range having both the upper limit and the lower limit that are any two numerical values selected from the above-mentioned group. The above-mentioned range may or may not include an endpoint. Relationships such as "0≤a≤1.0" and "0.1≤a≤0.5" may be satisfied, for example. "y" in the formula may be in a range having only one of the upper limit and the lower limit each of which is any one numerical value selected from the group consisting of 3.6, 3.7, 3.8, 3.9, 4.0, 4.1, 4.2, 4.3, and 4.4, for example, or in a range having both the upper limit and the lower limit that are any two numerical values selected from the above-mentioned group. The above-mentioned range may or may not include an endpoint. Relationships such as "3.6≤y≤4.4" may be satisfied, for example.

The olivine-type compound may include at least one selected from the group consisting of LiₓMnPO_{y}, LiₓMn_{0.9}Fe_{0.1}PO_{y}, LiₓMn_{0.8}Fe_{0.2}PO_{y}, LiₓMn_{0.7}Fe_{0.3}PO_{y}, LiₓMn_{0.6}Fe_{0.4}PO_{y}, LiₓMn_{0.5}Fe_{0.5}PO_{y}, LiₓMn_{0.4}Fe_{0.6}PO_{y}, LiₓMn_{0.3}Fe_{0.7}PO_{y}, LiₓMn_{0.2}Fe_{0.8}PO_{y}, LiₓMn_{0.1}Fe_{0.9}PO_{y}, and LiₓFePO_{y}, for example. In each formula, relationships such as "0.1≤x≤1.5" and "3.6≤y≤4.4" may be satisfied, for example.

The positive electrode active material may be doped with any dopant. The dopant may be either an interstitial one or an substitutional one. The dopant may include at least one selected from the group consisting of B, C, N, a halogen, Si, Na, Mg, Al, Mn, Co, Cr, Sc, Ti, V, Cu, Zn, Ga, Ge, Se, Sr, Y, Zr, Nb, Mo, In, Pb, Bi, Sb, Sn, W, La, Ce, Pr, Nd, Pm, Sm, Eu, Gd, Tb, Dy, Ho, Er, Tm, Yb, Lu, and an actinoid, for example. The amount-of-substance fraction of the dopant (the doping amount) may be in a range having only one of the upper limit and the lower limit each of which is any one numerical value selected from the group consisting of 0.01%, 0.1%, 1%, 3%, and 5%, for example, or in a range having both the upper limit and the lower limit that are any two numerical values selected from the above-mentioned group. The above-mentioned range may or may not include an endpoint. The doping amount may be in the range of 0.01% to 5%, for example.

### Conductive Material

The conductive material may form an electron conduction path inside the electrode film 10. The conductive material may include at least one selected from the group consisting of acetylene black, Ketjenblack (registered trademark), thermal black, furnace black, carbon fibers, carbon nanotubes, graphene flakes, metal fibers, and metal powder, for example. In the case where the electrode active material is a positive electrode active material, the above-mentioned group of materials that may constitute the conductive material may further include natural graphite, artificial graphite, and the like, for example.

The conductive material may be in the form of powder, for example. The D50 of the conductive material may be smaller than that of the electrode active material. The D50 of the conductive material may be in a range having only one of the upper limit and the lower limit each of which is any one numerical value selected from the group consisting of 0.01 µm, 0.05 µm, 0.1 µm, 0.5 µm, 1 µm, 3 µm, and 5 µm, for example, or in a range having both the upper limit and the lower limit that are any two numerical values selected from the above-mentioned group. The above-mentioned range may or may not include an endpoint. The D50 of the conductive material may be in the range of 0.01 µm to 5 µm, for example.

The mass fraction of the conductive material in electrode film 10 may be in a range having only one of the upper limit and the lower limit each of which is any one numerical value selected from the group consisting of 0%, 0.1%, 0.5%, 1%, 2%, 3%, 4%, 5%, 6%, 7%, 8%, 9%, and 10%, for example, or in a range having both the upper limit and the lower limit that are any two numerical values selected from the above-mentioned group. The above-mentioned range may or may not include an endpoint. The mass fraction of the conductive material may be in the range of 0% to 10%, for example.

### Solid Electrolyte

The solid electrolyte may form an ion conduction path inside the electrode film 10. The solid electrolyte may include at least one selected from the group consisting of a sulfide solid electrolyte, a halide solid electrolyte, an oxide solid electrolyte, a hydride solid electrolyte, and a nitride solid electrolyte, for example. The sulfide solid electrolyte may include at least one selected from the group consisting of an amorphous phase, a crystalline phase, and a glass ceramic (crystallized glass) phase. The crystalline phase may be of argyrodite type, LGPS type, and/or the like, for example. The sulfide solid electrolyte may include, for example, at least one selected from the group consisting of LiI-LiBr-Li₃PS₄, Li₂S-SiS₂, LiI-Li₂S-SiS₂, LiI-Li₂S-P₂S₃, LiI-Li₂O-Li₂S-P₂S₃, LiI-Li₂S-P₂O₅, LiI-Li₃PO₄-P₂S₃, Li₂S-GeS₂-P₂S₃, Li₂S-P₂S₃, Li₁₀GeP₂S₁₂, Li₄P₂S₆, Li₇P₃S₁₁, Li₃PS₄, and Li₇PS₆. For example, "LiI-LiBr-Li₃PS₄" refers to a sulfide solid electrolyte produced by mixing LiI, LiBr, and Li₃PS₄ in a freely-selected ratio (in amount of substance). For example, the sulfide solid electrolyte may be produced by a mechanochemical method. The mixing ratio may be expressed with the number placed in front of each raw material. For example, "10LiI-15LiBr-75Li₃PS₄" means that the mixing ratio (in amount of substance) is "LiI:LiBr:Li₃PS₄=10:15:75".

The sulfide solid electrolyte may have a composition represented by the general formula "yLiI-zLiBr-(100-y-z)[xLi₂S-(1-x)P₂S₅]", for example. "x" in the formula may be in a range having only one of the upper limit and the lower limit each of which is any one numerical value selected from the group consisting of 0.1, 0.2, 0.25, 0.3, 0.4, 0.5, 0.6, 0.7, 0.75, 0.8, and 0.9, for example, or in a range having both the upper limit and the lower limit that are any two numerical values selected from the above-mentioned group. The above-mentioned range may or may not include an endpoint. Relationships such as "0.1≤x≤0.9" may be satisfied, for example. In the formula, the relationship "0<(100-y-z)≤100" is satisfied. As long as this relationship is satisfied, "y" and "z" may be independently in a range having only one of the upper limit and the lower limit each of which is any one numerical value selected from the group consisting of 0, 5, 10, 15, 20, 25, and 30, or in a range having both the upper limit and the lower limit that are any two numerical values selected from the above-mentioned group. The above-mentioned range may or may not include an endpoint. For example, relationships such as "0≤y≤30" and "0≤z≤30" may be satisfied.

The sulfide solid electrolyte may have a composition represented by the general formula "Li₄₋ₓM₁₋ₓPₓS₄", for example. "x" in the formula may be in a range having only one of the upper limit and the lower limit each of which is any one numerical value selected from the group consisting of 0, 0.1, 0.2, 0.3, 0.4, 0.5, 0.6, 0.7, 0.8, 0.9, and 1, for example, or in a range having both the upper limit and the lower limit that are any two numerical values selected from the above-mentioned group. The above-mentioned range may or may not include an endpoint. Relationships such as "0<x<1" may be satisfied, for example. "M" in the formula may include at least one selected from the group consisting of Al, Zn, In, Ge, Si, Sn, Sb, Ga, and Bi, for example.

The sulfide solid electrolyte may have a composition represented by the general formula "Li₁₀₊ₓGe₁₊ₓP₂₋ₓS₁₂", for example. "x" in the formula may be in a range having only one of the upper limit and the lower limit each of which is any one numerical value selected from the group consisting of 0, 0.1, 0.2, 0.3, 0.4, 0.5, 0.6, and 0.7, for example, or in a range having both the upper limit and the lower limit that are any two numerical values selected from the above-mentioned group. The above-mentioned range may or may not include an endpoint. Relationships such as "0<x≤0.7" may be satisfied, for example. A sulfide solid electrolyte represented by this formula may include an LGPS-type crystalline phase, for example.

The halide solid electrolyte may have a composition represented by the general formula "Li₆₋ₙₐMₐX₆", for example. "n" in the formula represents the oxidation number of "M". "M" may include an atom whose oxidation number is +3, for example. "M" in the formula may include an atom whose oxidation number is +4, for example. "M" may include at least one selected from the group consisting of Y, Al, Ti, Zr, Ca, and Mg, for example. Relationships such as "0<a<2" may be satisfied, for example. "X" in the formula may include at least one selected from the group consisting of F, Cl, Br, and I, for example.

The solid electrolyte may be in the form of powder, for example. The D50 of the solid electrolyte may be smaller than that of the electrode active material. The D50 of the solid electrolyte may be in a range having only one of the upper limit and the lower limit each of which is any one numerical value selected from the group consisting of 0.01 µm, 0.05 µm, 0.1 µm, 0.5 µm, 1 µm, 3 µm, and 5 µm, for example, or in a range having both the upper limit and the lower limit that are any two numerical values selected from the above-mentioned group. The above-mentioned range may or may not include an endpoint. The D50 of the solid electrolyte may be in the range of 0.01 µm to 5 µm, for example.

The volume fraction of the solid electrolyte in electrode film 10 may be in a range having only one of the upper limit and the lower limit each of which is any one numerical value selected from the group consisting of 0%, 1%, 5%, 10%, 20%, 30%, 40%, 50%, 60%, and 70%, for example, or in a range having both the upper limit and the lower limit that are any two numerical values selected from the above-mentioned group. The above-mentioned range may or may not include an endpoint. The volume fraction of the solid electrolyte may be in the range of 0% to 70%, for example.

### Fibrous Binder

For example, the fibrous binder may be formed by fiberization (fiber-formation, fibrillation) of a particulate binder (an aggregate) by application of shear force and the like. For example, the application of shear force to a particulate binder may be carried out by passing, through a gap between rolls, a composite material including the particulate binder (which is to be made into a fibrous binder) and the electrode active material. The particulate binder may be made into a fibrous binder, and as a result, electrode film 10 may be formed. The roll machining may be carried out once, or may be repeated multiple times. Prior to the roll machining, a shear force may be applied to the composite material with the use of a jet mill, a stirring granulator, and/or the like, for example. In addition to the application of shear force, heating at 30°C to 150°C may also be carried out to facilitate fibrillation, for example. The particulate binder may be fully fibrillated or partially fibrillated.

The fibrous binder includes a polymer composition, for example. The polymer composition may be a homopolymer, a copolymer, a polymer blend, or a polymer alloy. The fibrous binder may include polytetrafluoroethylene (PTFE) and/or the like, for example. The fibrous binder may also include a freely-selected additional component in addition to PTFE. The additional component may include at least one selected from the group consisting of polyolefin, cellulose, polyether, and polysiloxane, for example. The additional component and PTFE may form at least one selected from the group consisting of a polymer blend, a polymer alloy, and a copolymer. The mass fraction of PTFE or the mass fraction of a tetrafluoroethylene (TFE)-derived component in the fibrous binder may be in a range having only one of the upper limit and the lower limit each of which is any one numerical value selected from the group consisting of 0%, 10%, 20%, 30%, 40%, 50%, 60%, 70%, 80%, 90%, 95%, 99%, and 100%, for example, or in a range having both the upper limit and the lower limit that are any two numerical values selected from the above-mentioned group. The above-mentioned range may or may not include an endpoint. The mass fraction of PTFE in the fibrous binder may be in the range of 0% to 100%, for example.

The number average molecular weight "Mn" of the polymer constituting the fibrous binder may be in a range having only one of the upper limit and the lower limit each of which is any one numerical value selected from the group consisting of 10×10⁴, 50×10⁴, 100×10⁴, 150×10⁴, 200×10⁴, 300×10⁴, 400×10⁴, 500×10⁴, 1000×10⁴, 2000×10⁴, and 3000×10⁴, for example, or in a range having both the upper limit and the lower limit that are any two numerical values selected from the above-mentioned group. The above-mentioned range may or may not include an endpoint. The number average molecular weight may be in the range of 10×10⁴ to 3000×10⁴, for example. The number average molecular weight may be determined from the standard specific gravity, for example. The sample for the measurement is prepared in conformity with "ASTM D-4895 98". The standard specific gravity is measured by a water displacement method in conformity with "ASTM D-792".

The fiber diameter (the fibril diameter) of the fibrous binder may be in a range having only one of the upper limit and the lower limit each of which is any one numerical value selected from the group consisting of 1 nm, 5 nm, 10 nm, 15 nm, 20 nm, 50 nm, 100 nm, 200 nm, 500 nm, and 1000 nm, for example, or in a range having both the upper limit and the lower limit that are any two numerical values selected from the above-mentioned group. The above-mentioned range may or may not include an endpoint. The fiber diameter may be in the range of 1 nm to 1000 nm, for example.

The fibrous binder may form a fiber matrix. For example, the film shape may be maintained by the fiber matrix holding the electrode active material (powder). The fiber matrix may be evaluated in terms of fiber density, for example. The fiber density may be measured by the method described below, for example. A cross-sectional SEM image of electrode film 10 is prepared. At a freely-selected position in the cross-sectional SEM image, a straight line of 20 µm in length is drawn. Fibrous things that cross the straight line are counted, and thereby the fiber density [unit, pieces/20 µm] is determined. The fiber density is measured at three or more positions in the cross-sectional SEM image. The arithmetic mean of these three or more positions is used. The fiber density may be in a range having only one of the upper limit and the lower limit each of which is any one numerical value selected from the group consisting of 1, 2, 5, 10, 20, 40, 60, 80, and 100, for example, or in a range having both the upper limit and the lower limit that are any two numerical values selected from the above-mentioned group. The above-mentioned range may or may not include an endpoint. The fiber density may be in the range of 1 to 100, for example.

The mass fraction of the fibrous binder in electrode film 10 may be in a range having only one of the upper limit and the lower limit each of which is any one numerical value selected from the group consisting of 0.1%, 0.5%, 1%, 2%, 3%, 4%, 5%, 6%, 7%, 8%, 9%, and 10%, for example, or in a range having both the upper limit and the lower limit that are any two numerical values selected from the above-mentioned group. The above-mentioned range may or may not include an endpoint. The mass fraction of the fibrous binder in electrode film 10 may be in the range of 0.1% to 10%, for example.

### Non-Fibrous Binder

For example, the form of the non-fibrous binder is not particularly limited. For example, the non-fibrous binder may be in particulate form, in film form, amorphous, and/or the like. For example, the adhesive force of the non-fibrous binder may be more than that of the fibrous binder. For example, the non-fibrous binder may serve to make electrode film 10 adhere to current collector 20. For example, the non-fibrous binder may include at least one selected from the group consisting of polyvinylidene difluoride (PVdF), vinylidene difluoride-hexafluoropropylene copolymer (PVdF-HFP), carboxymethylcellulose (CMC), polyacrylic acid (PAA), polyvinyl alcohol (PVA), polyvinylpyrrolidone (PVP), polyethylene oxide (PEO), styrene-butadiene rubber (SBR), acrylonitrile butadiene rubber (NBR), polyethylene (PE), polypropylene (PP), polyacrylonitrile (PAN), polyoxyethylene alkyl ether, polyimide (PI), polyamide-imide (PAI), and derivatives of these, for example.

The mass fraction of the non-fibrous binder in electrode film 10 may be in a range having only one of the upper limit and the lower limit each of which is any one numerical value selected from the group consisting of 0%, 0.1%, 0.5%, 1%, 2%, 3%, 4%, 5%, 6%, 7%, 8%, 9%, and 10%, for example, or in a range having both the upper limit and the lower limit that are any two numerical values selected from the above-mentioned group. The above-mentioned range may or may not include an endpoint. The mass fraction of the non-fibrous binder in electrode film 10 may be in the range of 0% to 10%, for example.

The mass ratio "(fibrous binder):(non-fibrous binder)" may be in a range defined by two endpoints that are any two sets selected from the group consisting of "1:9", "2:8", "3:7", "4:6", "5:5", "6:4", "7:3", "8:2", "9:1", and "10:0", for example. Relationships such as the mass ratio "(fibrous binder):(non-fibrous binder)=1:9 to 10:0" may be satisfied, for example.

### Additional Component

Electrode film 10 may include a freely-selected additional component. The additional component may include an inorganic filler, an organic filler, a surface modifier, a dispersant, a lubricant, a flame retardant, a protective agent, a flux, a coupling agent, an adsorbent, and/or the like, for example. The additional component may include polyoxyethylene allylphenyl ether phosphate, zeolite, silane coupling agent, molybdenum sulfide, tungsten oxide, and/or the like, for example.

### First Battery

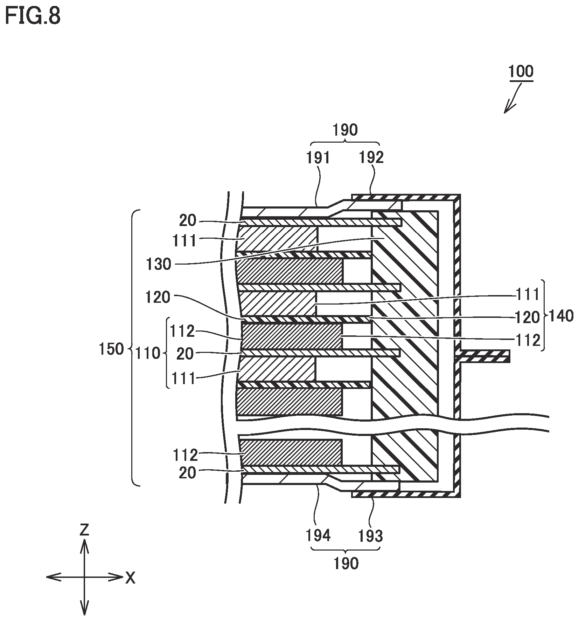

Fig. 7 is a schematic perspective view illustrating a first battery according to the present embodiment. Fig. 8 is a schematic view of a cross section cut along the line VIII-VIII in Fig. 7. A first battery 100 is an example of a battery according to the present embodiment. First battery 100 includes a first power generation element 150. First power generation element 150 is a stack-type one. First power generation element 150 has a bipolar structure. It should be noted that the power generation element may also be referred to as "an electrode assembly". Hereinafter, "perpendicular-to-plane direction" refers to the direction of a normal to the surface of a sheet-form member (such as a foil sheet or an electrode, for example). "In-plane direction" refers to any direction that is orthogonal to the perpendicular-to-plane direction. In the drawings related to the present embodiment, the Z-axis direction corresponds to the perpendicular-to-plane direction. Each of the X-axis direction and the Y-axis direction is an example of an in-plane direction.

First battery 100 includes a first exterior package 190. First exterior package 190 accommodates first power generation element 150. First exterior package 190 may include a first current collector plate 191, a first laminated film 192, a second laminated film 193, and a second current collector plate 194, for example. First laminated film 192 and second laminated film 193 are joined to each other at an end in an in-plane direction. At the joint portion between first laminated film 192 and second laminated film 193, a sealing material (not illustrated) may be interposed between first laminated film 192 and second laminated film 193.

At the ends in the stacking direction (the Z-axis direction), first current collector plate 191 and second current collector plate 194 are joined to first power generation element 150, respectively. First laminated film 192 is joined to first current collector plate 191. Second laminated film 193 is joined to second current collector plate 194. At the joint portion between the current collector plate and the laminated film, a sealing material (not illustrated) may be interposed between the current collector plate and the laminated film.

### First Power Generation Element

First power generation element 150 includes a plurality of bipolar electrodes 110 and a plurality of first separators 120. In the perpendicular-to-plane direction (the Z-axis direction), bipolar electrodes 110 and first separators 120 are alternately stacked. In the perpendicular-to-plane direction, each bipolar electrode 110 includes a positive electrode active material layer 111, current collector 20, and a negative electrode active material layer 112 in this order. In an in-plane direction (for example, the X-axis direction), current collector 20 extends outwardly beyond positive electrode active material layer 111 and negative electrode active material layer 112. For example, current collector 20 may extend outwardly beyond positive electrode active material layer 111 and negative electrode active material layer 112 along the entire periphery in an in-plane direction. At least one of positive electrode active material layer 111 and negative electrode active material layer 112 is electrode film 10 described above.

First power generation element 150 includes a sealing material 130. At an end in an in-plane direction, sealing material 130 is attached to current collector 20. For example, sealing material 130 may be heat-sealed to current collector 20. For example, sealing material 130 may be provided along the entire periphery in an in-plane direction. Sealing material 130 may include a resin material and/or the like, for example. Sealing material 130 seals interstices between current collectors 20 that are adjacent to each other in the perpendicular-to-plane direction. The interstices between current collectors 20 are thus sealed with sealing material 130, and thereby cells 140 are formed. A cell 140 is the smallest constituent unit of first power generation element 150. Because it includes a plurality of cells 140, first battery 100 may also be referred to as "a bipolar module" and the like. Each of cells 140 is hermetically sealed. Cells 140 are segregated from each other. Each of cells 140 includes positive electrode active material layer 111, first separator 120, and negative electrode active material layer 112.

### First Separator

First separator 120 is capable of separating positive electrode active material layer 111 from negative electrode active material layer 112. First separator 120 is electrically insulating. First separator 120 may include at least one selected from the group consisting of a resin film, an inorganic particle layer, and an organic particle layer, for example. First separator 120 may include a resin film and an inorganic particle layer, for example.

The resin film is porous. The resin film may include a microporous film, a nonwoven fabric, and/or the like, for example. The resin film includes a resin skeleton. The resin skeleton may be continuous in mesh form, for example. Gaps in the resin skeleton form pores. The resin film allows an electrolyte solution to permeate therethrough. The average pore size of the resin film may be in a range having only one of the upper limit and the lower limit each of which is any one numerical value selected from the group consisting of 0.01 µm, 0.1 µm, 0.5 µm, and 1 µm, for example, or in a range having both the upper limit and the lower limit that are any two numerical values selected from the above-mentioned group. The above-mentioned range may or may not include an endpoint. The average pore size of the resin film may be in the range of 0.01 µm to 1 µm, for example. "Average pore size" may be measured by mercury porosimetry. The Gurley value of the resin film may be in a range having only one of the upper limit and the lower limit each of which is any one numerical value selected from the group consisting of 50 s/100cm³, 100 s/100cm³, 150 s/100cm³, 200 s/100cm³, and 250 s/100cm³, for example, or in a range having both the upper limit and the lower limit that are any two numerical values selected from the above-mentioned group. The above-mentioned range may or may not include an endpoint. The Gurley value of the resin film may be in the range of 50 s/100cm³ to 250 s/100cm³, for example. "Gurley value" may be measured by a Gurley test method.

The resin film may include at least one selected from the group consisting of an olefin-based resin, a polyurethane-based resin, a polyamide-based resin, a cellulose-based resin, a polyether-based resin, an acrylic-based resin, a polyester-based resin, and the like, for example. The resin film may include at least one selected from the group consisting of PE, PP, polyamide (PA), PAI, PI, aromatic polyamide (aramid), polyphenylene ether (PPE), and derivatives of these, for example. The resin film may be formed by stretching, phase separation, and/or the like, for example. The thickness of the resin film may be in a range having only one of the upper limit and the lower limit each of which is any one numerical value selected from the group consisting of 5 µm, 10 µm, 15 µm, 20 µm, 25 µm, 30 µm, 40 µm, and 50 µm, for example, or in a range having both the upper limit and the lower limit that are any two numerical values selected from the above-mentioned group. The above-mentioned range may or may not include an endpoint. The thickness of the resin film may be in the range of 5 µm to 50 µm, for example.

The resin film may have a monolayer structure. The resin film may be made of a PE layer, for example. A skeleton of a PE layer is formed of PE. The PE layer may have shut-down function. The resin film may have a multilayer structure, for example. The resin film may include a PP layer and a PE layer, for example. A skeleton of a PP layer is formed of PP. The resin film may have a three-layer structure, for example. The resin film may be formed by stacking a PP layer, a PE layer, and a PP layer in this order, for example. The thickness of the PE layer and the PP layer may be independently in a range having only one of the upper limit and the lower limit each of which is any one numerical value selected from the group consisting of 3 µm, 5 µm, 10 µm, 15 µm, and 20 µm, or in a range having both the upper limit and the lower limit that are any two numerical values selected from the above-mentioned group. The above-mentioned range may or may not include an endpoint. The thickness of the PE layer and the PP layer may be independently in the range of 3 µm to 20 µm, for example.

The inorganic particle layer may be formed on the surface of the resin film. The inorganic particle layer may be formed on only one side of the resin film, or may be formed on both sides of the resin film. The inorganic particle layer may be formed on the side facing the positive electrode active material layer 111, or may be formed on the side facing the negative electrode active material layer 112. The inorganic particle layer may be formed on the surface of positive electrode active material layer 111, or may be formed on the surface of negative electrode active material layer 112.

The inorganic particle layer is porous. The inorganic particle layer includes inorganic particles. The inorganic particles may also be called "an inorganic filler". Gaps between the inorganic particles form pores. The thickness of the inorganic particle layer may be in a range having only one of the upper limit and the lower limit each of which is any one numerical value selected from the group consisting of 0.5 µm, 1 µm, 3 µm, 5 µm, and 10 µm, for example, or in a range having both the upper limit and the lower limit that are any two numerical values selected from the above-mentioned group. The above-mentioned range may or may not include an endpoint. The thickness of the inorganic particle layer may be in the range of 0.5 µm to 10 µm, for example. The inorganic particles may include a heat-resistant material, for example. The inorganic particle layer that includes a heat-resistant material is also called "HRL (Heat Resistance Layer)". The inorganic particles may include at least one selected from the group consisting of boehmite, alumina, zirconia, titania, magnesia, silica, and the like. The shape of the inorganic particles is not particularly limited. The inorganic particles may be spherical, rod-like, plate-like, fibrous, and/or the like, for example. The D50 of the inorganic particles may be in a range having only one of the upper limit and the lower limit each of which is any one numerical value selected from the group consisting of 0.1 µm, 0.5 µm, 1 µm, 3 µm, 5 µm, and 10 µm, for example, or in a range having both the upper limit and the lower limit that are any two numerical values selected from the above-mentioned group. The above-mentioned range may or may not include an endpoint. The D50 of the inorganic particles may be in the range of 0.1 µm to 10 µm, for example. The inorganic particle layer may further include a binder. The binder may include at least one selected from the group consisting of an acrylic-based resin, a polyamide-based resin, a fluorine-based resin, an aromatic-polyether-based resin, and a liquid-crystal-polyester-based resin, and the like, for example.

First separator 120 may include an organic particle layer, for example. First separator 120 may include an organic particle layer instead of the resin film, for example. First separator 120 may include an organic particle layer instead of the inorganic particle layer, for example. First separator 120 may include both the resin film and an organic particle layer. First separator 120 may include both the inorganic particle layer and an organic particle layer. First separator 120 may include the resin film, the inorganic particle layer, and an organic particle layer.

The thickness of the organic particle layer may be in a range having only one of the upper limit and the lower limit each of which is any one numerical value selected from the group consisting of 0.1 µm, 0.5 µm, 1 µm, 5 µm, 10 µm, 20 µm, and 50 µm, for example, or in a range having both the upper limit and the lower limit that are any two numerical values selected from the above-mentioned group. The above-mentioned range may or may not include an endpoint. The thickness of the organic particle layer may be in the range of 0.1 µm to 50 µm, for example. The organic particle layer includes organic particles. The organic particles may also be called "an organic filler". The organic particles may include a heat-resistant material. The organic particles may include at least one selected from the group consisting of PE, PP, PTFE, PI, PAI, PA, aramid, and the like, for example. The organic particles may be spherical, rod-like, plate-like, fibrous, and/or the like, for example. The D50 of the organic particles may be in the range of 0.1 to 10 µm, for example.

First separator 120 may include a mixed layer, for example. The mixed layer includes both inorganic particles and organic particles.

First separator 120 may include a solid electrolyte layer, for example. The solid electrolyte layer includes a solid electrolyte and a binder. The solid electrolyte may be selected from the materials mentioned above as components of electrode film 10, for example.

### Electrolyte Solution

First battery 100 may include an electrolyte solution, for example. The electrolyte solution is a liquid electrolyte. The electrolyte solution includes a solute and a solvent. The concentration of the solute may be in a range having only one of the upper limit and the lower limit each of which is any one numerical value selected from the group consisting of 0.5 mol/L, 1.0 mol/L, 1.5 mol/L, 2.0 mol/L, and 2.5 mol/L, for example, or in a range having both the upper limit and the lower limit that are any two numerical values selected from the above-mentioned group. The above-mentioned range may or may not include an endpoint. The concentration of the solute may be in the range of 0.5 mol/L to 2.5 mol/L, for example. "Mol/L" may also be expressed as "M". The solute includes a supporting salt (a Li salt). The solute may include an inorganic acid salt, an imide salt, an oxalato complex, a halide, and/or the like, for example. The solute may include at least one selected from the group consisting of LiPF₆, LiBF₄, LiClO₄, LiAsF₆, LiSbF₆, LiN(SO₂F)₂ "LiFSI", LiN(SO₂CF₃)₂ "LiTFSI", LiB(C₂O₄)₂ "LiBOB", LiBF₂(C₂O₄) "LiDFOB", LiPF₂(C₂O₄)₂ "LiDFOP", LiPO₂F₂, FSO₃Li, LiI, LiBr, and derivatives of these, for example. It should be noted that the word enclosed in double quotation marks, such as "LiFSI", represents a common name or an abbreviation of the substance.

The electrolyte solution may include a carbonate-based solvent (a carbonate-ester-based solvent), for example. The solvent may include a cyclic carbonate, a chain carbonate, a fluorinated carbonate, and/or the like, for example. The solvent may include at least one selected from the group consisting of ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives of these, for example.

The solvent may include a cyclic carbonate (such as EC, PC, FEC) and a chain carbonate (such as EMC, DMC, DEC), for example. The volume ratio "(cyclic carbonate):(chain carbonate)" may be in a range defined by two endpoints that are any two sets selected from the group consisting of "1:9", "2:8", "3:7", "4:6", "5:5", "6:4", "7:3", "8:2", and "9:1", for example. Relationships such as the volume ratio "(cyclic carbonate):(chain carbonate)=1:9 to 9:1" may be satisfied, for example.

The solvent may include a cyclic carbonate (such as EC, PC) and a fluorinated cyclic carbonate (such as FEC), for example. The volume ratio "(cyclic carbonate):(fluorinated cyclic carbonate)" may be in a range defined by two endpoints that are any two sets selected from the group consisting of "99:1", "90:10", "70:30", "50:50", "30:70", "10:90", and "1:99", for example. Relationships such as the volume ratio "(cyclic carbonate): (fluorinated cyclic carbonate)=99:1 to 1:99" may be satisfied, for example.

The solvent may include EC, FEC, EMC, DMC, and DEC, for example. The volume ratio of these components may satisfy the relationship represented by the relational expression "V_{EC}+V_{FEC}+V_{EMC}+V_{DMC}+V_{DEC}=10", for example. In the relational expression, each of "V_{EC}, V_{FEC}, V_{EMC}, V_{DMC}, V_{DEC}" represents the volume ratio of EC, FEC, EMC, DMC, DEC, respectively. The relationships "1≤V_{EC}≤4", "0≤V_{FEC}≤3", "(V_{EC}+V_{FEC})≤4", "0≤V_{EMC}≤9", "0≤V_{DMC}≤9", "0≤V_{DEC}≤9", and "6≤(V_{EMC}+V_{DMC}+V_{DEC})≤9" are satisfied. For example, the relationship "1≤V_{EC}≤2" or "2≤V_{EC}≤3" may be satisfied. For example, the relationship "1≤V_{FEC}≤2" or "2≤V_{FEC}≤4" may be satisfied. For example, the relationship "3≤V_{EMC}≤4" or "6≤V_{EMC}≤8" may be satisfied. For example, the relationship "3≤V_{DMC}≤4" or "6≤V_{DMC}≤8" may be satisfied. For example, the relationship "3≤V_{DEC}≤4" or "6≤V_{DEC}≤8" may be satisfied.

The composition of the solvent in volume ratio may be "EC/EMC=3/7", "EC/DMC=3/7", "EC/FEC/DEC=1/2/7", "EC/DMC/EMC=3/4/3", "EC/DMC/EMC=3/3/4", "EC/FEC/DMC/EMC=2/1/4/3", "EC/FEC/DMC/EMC=1/2/4/3", "EC/FEC/DMC/EMC=2/1/3/4", "EC/FEC/DMC/EMC=1/2/3/4", or the like, for example.

The electrolyte solution may include an ether-based solvent, for example. The electrolyte solution may include at least one selected from the group consisting of tetrahydrofuran (THF), 1,4-dioxane (DOX), 1,3-dioxolane (DOL), 1,2-dimethoxyethane (DME), 1,2-diethoxyethane (DEE), hydrofluoroether (HFE), ethylglyme, triglyme, tetraglyme, and derivatives of these, for example.

The electrolyte solution may include a freely-selected additive. The amount to be added (the mass fraction to the total amount of the electrolyte solution) may be in a range having only one of the upper limit and the lower limit each of which is any one numerical value selected from the group consisting of 0.01%, 0.05%, 0.1%, 1%, 3%, and 5%, for example, or in a range having both the upper limit and the lower limit that are any two numerical values selected from the above-mentioned group. The above-mentioned range may or may not include an endpoint. The amount to be added may be in the range of 0.01% to 5%, for example. The additive may include an SEI (Solid Electrolyte Interphase) formation promoter, an SEI formation inhibitor, a gas generation agent, an overcharging inhibitor, a flame retardant, an antioxidant, an electrode-protecting agent, a surfactant, and/or the like, for example.

The additive may include at least one selected from the group consisting of vinylene carbonate (VC), vinylethylene carbonate (VEC), 1,3-propane sultone (PS), tert-amylbenzene, 1,4-di-tert-butylbenzene, biphenyl (BP), cyclohexylbenzene (CHB), ethylene sulfite (ES), ethylene sulfate (DTD), γ-butyrolactone, phosphazene compound, carboxylate ester [such as methyl formate (MF), methyl acetate (MA), methyl propionate (MP), diethyl malonate (DEM), for example], fluorobenzene (such as monofluorobenzene (FB), 1,2-difluorobenzene, 1,3-difluorobenzene, 1,4-difluorobenzene, 1,2,3-trifluorobenzene, 1,2,4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, hexafluorobenzene, for example), fluorotoluene (such as 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, octafluorotoluene, for example), benzotrifluoride (such as benzotrifluoride, 2-fluorobenzotrifluoride, 3-fluorobenzotrifluoride, 4-fluorobenzotrifluoride, 2-methylbenzotrifluoride, 3-methylbenzotrifluoride, 4-methylbenzotrifluoride, for example), fluoroxylene (such as 3-fluoro-o-xylene, 4-fluoro-o-xylene, 2-fluoro-m-xylene, 5-fluoro-m-xylene, for example), sulfur-containing heterocyclic compound (such as benzothiazole, 2-methylbenzothiazole, tetrathiafulvalene, for example), nitrile compound (such as adiponitrile, succinonitrile, for example), phosphate (such as trimethyl phosphate, triethyl phosphate, for example), carboxylic anhydride (such as acetic anhydride, propionic anhydride, oxalic anhydride, succinic anhydride, maleic anhydride, phthalic anhydride, benzoic anhydride, for example), alcohol (such as methanol, ethanol, n-propyl alcohol, ethylene glycol, diethylene glycol monomethyl ether, for example), and derivatives of these, for example.

The components described above as the solute and the solvent may be used as an additive (a trace component). The additive may include at least one selected from the group consisting of LiBF₄, LiFSI, LiTFSI, LiBOB, LiDFOB, LiDFOP, LiPO₂F₂, FSO₃Li, LiI, LiBr, HFE, DOX, PC, FEC, and derivatives of these, for example.

The electrolyte solution may include an ionic liquid, for example. The ionic liquid may include at least one selected from the group consisting of a sulfonium salt, an ammonium salt, a pyridinium salt, a piperidinium salt, a pyrrolidinium salt, a morpholinium salt, a phosphonium salt, an imidazolium salt, and derivatives of these, for example.

First battery 100 may include a gelled electrolyte, for example. The gelled electrolyte may include an electrolyte solution and a polymer material. The polymer material may form a polymer matrix. The polymer material may include at least one selected from the group consisting of PVDF, PVdF-HFP, polyacrylonitrile (PAN), PVdF-PAN, polyethylene oxide (PEO), polyethylene glycol (PEG), and derivatives of these, for example.

### Second Battery

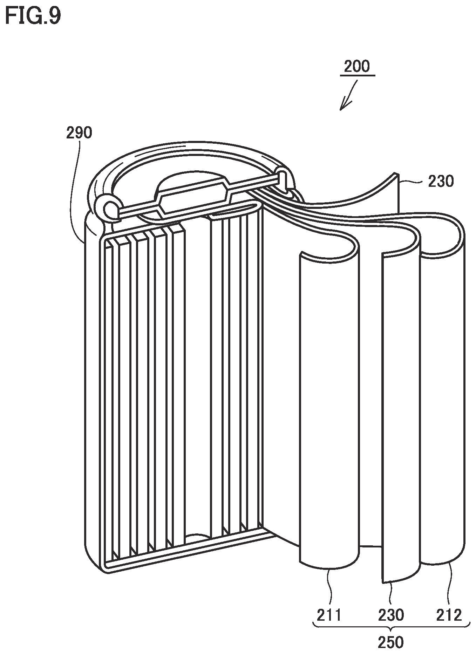

Fig. 9 is a schematic view illustrating a second battery according to the present embodiment. A second battery 200 is an example of a battery according to the present embodiment. Second battery 200 includes a second power generation element 250. Second power generation element 250 is a wound-type one. Second power generation element 250 has a monopolar structure.

Second battery 200 includes a second exterior package 290. Second exterior package 290 accommodates second power generation element 250. The outer shape of second exterior package 290 may be cylindrical or prismatic, for example. Second exterior package 290 may be a case made of metal, for example. Second exterior package 290 may be sealed by swaging, laser processing, and/or the like, for example.

### Second Power Generation Element

Second power generation element 250 includes a stack. The stack includes a positive electrode 211, a second separator 230, and a negative electrode 212 in this order. The number of second separator 230 may be one, or may be two or more. For example, the stack may include positive electrode 211, second separator 230, negative electrode 212, and second separator 230 in this order. Each of positive electrode 211, second separator 230, and negative electrode 212 has a belt-like planar shape. The stack is wound spirally. The stack is wound along the length direction of the electrode. At least one of positive electrode 211 and negative electrode 212 includes electrode film 10. The material mentioned above as the material of first battery 100 may also be used as the material of second battery 200 without limitation.

Although the embodiments of the present disclosure have been described, the embodiments disclosed herein are illustrative and non-restrictive in any respect. The scope of the present disclosure is defined by the terms of the claims, and is intended to encompass any modifications within the meaning and the scope equivalent to the terms of the claims.

## Claims

1. An electrode (50) comprising:
a current collector (20); and
a first electrode film (10a), wherein
the first electrode film (10a) includes an electrode active material and a fibrous binder,
the first electrode film (10a) is adhered to a first surface (20a) of the current collector (20),
a carbon coating layer (30) is placed on a part of the first surface (20a) of the current collector (20), and
on the first surface (20a) of the current collector (20), the carbon coating layer (30) is placed in a non-continuous pattern.

2. The electrode (50) according to claim 1, wherein
the first electrode film (10a) has a first region (R1) adhered to the first surface (20a) of the current collector (20) with the carbon coating layer (30) interposed therebetween as well as a second region (R2) adhered to the first surface (20a) of the current collector (20) without the carbon coating layer (30) interposed therebetween, and
in the first electrode film (10a), a ratio of a density of the second region (R2) to a density of the first region (R1) is from 0.8 to 1.2.

3. The electrode (50) according to claim 1, wherein the first electrode film (10a) is a self-standing film.

4. The electrode (50) according to claim 1, further comprising:
a second electrode film (10b), wherein
the second electrode film (10b) includes an electrode active material and a fibrous binder,
the second electrode film (10b) is adhered to a second surface (20b) of the current collector (20), the second surface is opposite to the first surface (20a),
a carbon coating layer (30) is placed on a part of the second surface (20b) of the current collector (20), and
on the second surface (20b) of the current collector (20), the carbon coating layer (30) is placed in a non-continuous pattern.

5. The electrode (50) according to claim 4, wherein
the second electrode film (10b) has a first region (R1) adhered to the second surface (20b) of the current collector (20) with the carbon coating layer (30) interposed therebetween as well as a second region (R2) adhered to the second surface (20b) of the current collector (20) without the carbon coating layer (30) interposed therebetween, and
in the second electrode film (10b), a ratio of a density of the second region (R2) to a density of the first region (R1) is from 0.8 to 1.2.

6. The electrode (50) according to claim 4, wherein the second electrode film (10b) is a self-standing film.

7. The electrode (50) according to claim 1, wherein
the current collector (20) has a wavy shape undulating in a thickness direction,
the current collector (20) has a crest protruding to the first electrode film (10a) and a trough protruding away from the first electrode film (10a), and
on the first surface (20a) of the current collector (20), the carbon coating layer (30) is placed at a region including the trough.

8. The electrode (50) according to claim 4, wherein
the current collector (20) has a wavy shape undulating in a thickness direction,
the current collector (20) has a crest protruding to the first electrode film (10a) and a trough protruding away from the first electrode film (10a),
on the first surface (20a) of the current collector (20), the carbon coating layer (30) is placed at a region including the trough, and
on the second surface (20b) of the current collector (20), the carbon coating layer (30) is placed at a region including the crest.

9. A battery (100,200) comprising the electrode (50) according to any one of claims 1 to 8.

10. The battery (100,200) according to claim 9, having a bipolar structure.
